# EUROPEAN PATENT SPECIFICATION

(11) **EP 0 997 611 B1**
(45) Date of publication and mention of the grant of the patent: **07.09.2005**
(21) Application number: 99308572.9
(22) Date of filing: 28.10.1999
(51) Int. Cl.: F02B 3/06, F02B 23/06, F02F 3/26

(54) **Direct injection internal combustion engine**
Brennkraftmaschine mit Direkteinspritzung
Moteur à combustion interne avec injection directe

(30) Priority: 28.10.1998 JP 30718598
(43) Date of publication of application: 03.05.2000
(73) Proprietor: NISSAN MOTOR COMPANY LIMITED, Kanagawa-prefecture (JP)
(72) Inventor: Matayoshi, Yutaka, Yokosuka city, Kanagawa (JP); Aiyoshizawa, Eiji, Yokohama city, Kanagawa (JP); Hasegawa, Manabu, Zushi city, Kanagawa (JP); Nishimura, Toshifumi, Yokosuka city, Kanagawa (JP)
(74) Representative: Godwin, Edgar James

(56) References cited:
- EP-A- 0 105 933
- WO-A-91/05156
- DE-A- 2 751 985
- FR-A- 2 294 333
- GB-A- 1 292 284
- JP-A- 3 164 521
- JP-A- 7 189 700
- US-A- 4 721 075

## Description

This invention relates to the construction of a direct injection internal combustion engine.

Tokkai Hei 9-329027 published by the Japanese Patent Office in 1997 discloses a construction of a direct injection internal combustion engine wherein a fuel injector is disposed vertically in the center part of a combustion chamber, and three intake valves and two exhaust valves are alternately disposed around the injector to make the air-fuel mixture uniform in the combustion chamber.

In this engine, the ceiling of the combustion chamber on which the intake valves and exhaust valves are disposed has the shape of a pent roof formed by two inclined surfaces.

Hence, the capacity of the combustion chamber is still large at the compression top dead center of the piston, and in an engine with high compression ratio such as a diesel engine, the capacity of a cavity formed on a piston as a part of the combustion chamber must be formed small in volume in order to decrease the total capacity of the combustion chamber at compression top dead center.

However, miniaturization of the cavity often brings an undesirable effect on combustion efficiency and fuel economy.

JP-03-164521 A discloses an engine in accordance with the preamble of claim 1.

It is therefore an object of this invention to ensure a sufficient capacity of the cavity formed on a piston in a direct injection engine with a high compression ratio.

In order to achieve the above object, this invention provides an internal combustion engine as set forth in claim 1.

The details as well as other features and advantages of this invention are set forth in the remainder of the specification and are shown in the accompanying drawings.

### BRIEF DESCRIPTION OF THE DRAWINGS

Fig. 1 is a sectional view of essential parts of an engine in a first embodiment, not according to this invention.
Fig. 2 is a schematic cross-sectional view of a cylinder block of the engine.
Fig. 3 is a top view of an engine piston.
Fig. 4 is a longitudinal sectional view of the upper part of the engine piston taken along a line IV - IV of Fig. 3
Fig. 5 is a diagram showing a relation between cavity offset and smoke concentration.
Fig. 6 is similar to Fig. 1, but showing a second embodiment, again not in accordance with this invention.
Fig. 7 is similar on Fig. 2, but showing the second embodiment.
Fig. 8 is a diagram showing a relation between valve offset and charging efficiency.
Fig. 9 is similar to Fig. 1, but showing a third embodiment, according to this invention.
Fig. 10 is similar to Fig. 1, but showing a fourth embodiment, according to this invention.
Fig. 11 is a schematic cross-sectional view of a lower part of a cylinder head according to a fifth embodiment.
Fig. 12 is similar to Fig. 11, but showing a sixth embodiment.
Fig. 13 is similar to Fig. 11, but showing a seventh embodiment.
Fig. 14 is a cross-sectional view of part of a cylinder head according to the seventh embodiment.

### DESCRIPTION OF THE EMBODIMENTS

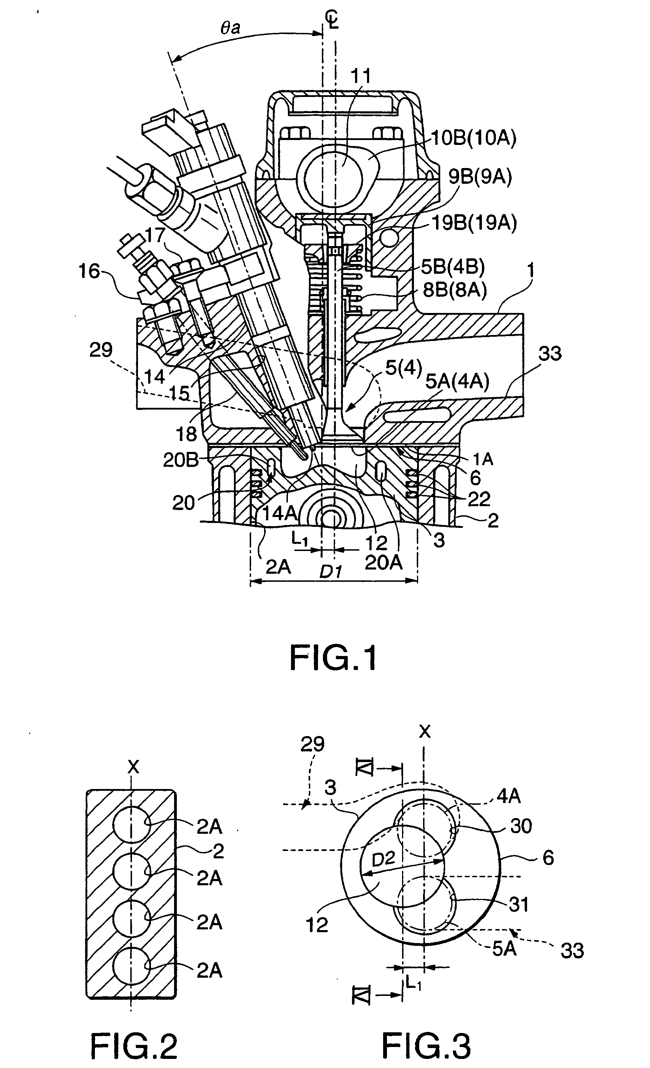

Referring to Fig. 1 of the drawings, a multi -cylinder direct injection diesel engine, which is not in accordance with this invention, is provided with a cylinder block 2 and a cylinder head 1 fixed to the upper end of the cylinder block 2.

Plural cylinders 2A are arranged in a row in the cylinder block 2 as shown in Fig. 2.

Referring again to Fig. 1, a piston 3 reciprocates in each cylinder 2A and a combustion chamber 6 is partitioned in the cylinder 2A by the piston 3 and cylinder head 1. Moreover, an intake valve 4 and exhaust valve 5 are provided to each cylinder 2A in the cylinder head 1.

An intake valve 4 is installed in an opening of an intake port 29. An exhaust valve 5 is installed in an opening of an exhaust port 33. The intake valve 4 and exhaust valve 5 are arranged so as to satisfy the following conditions.

First, the axial center line of the intake valve 4 and exhaust valve 5 is made almost parallel to the axial center line of the piston 3.

A reference line connecting the centers of the intake valve 4 and exhaust valve 5 is made to coincide with a center line *X* connecting the centers of a row of the cylinders 2A shown in Fig. 2. By installing the intake valve 4 and exhaust valve 5 on the center line *X* of the row of cylinders instead of at an offset position from the center line *X* of the row of cylinders, the diameter of each valve can be made the largest possible diameter.

The exhaust valve 5 is pushed in the closing direction corresponding to the upward direction of Fig. 1 by a valve spring 8B. The valve spring 8B is supported by the cylinder head 1 at the lower end, and the upper end comes in contact with a collet 19B which is attached to a valve stem 5B of the exhaust valve 5. The exhaust valve 5 also comes in contact with a cam 10B via a lifter 9B fixed to the upper end of the valve stem 5B, and it displaces downward in Fig. 1 to open against the force of the valve spring 8B according to the rotation of the cam 10B.

The intake valve 4 is likewise pushed in the closing direction by a valve spring 8A gripped between a collet 19A attached to a valve stem 4B and the cylinder head 1. It also comes in contact with a cam 10A via a lifter 9A at the upper end, and it displaces downward to open against the force of the valve spring 8A according to the rotation of the cam 10A.

The cams 10A, 10B are commonly formed on a camshaft 11. Due to the difference of the initial rotational positions of the cams 10A and 10B, a phase difference is introduced into the valve opening timing of the intake valve 4 and exhaust valve 5.

The above mechanism to drive this intake valve 4 and exhaust valve 5 is known as a direct valve drive mechanism.

A lower surface 1A of the cylinder head 1 facing the cylinder block 2 forms a flat plane, and the lower surfaces of a valve body 4A of the intake valve 4 and a valve body 5A of the exhaust valve 5 also form a flat plane which is continuous with that of the lower surface 1A of the cylinder head 1, when the valve bodies 4A, 5A are in closed position.

By making the lower surface 1A of the cylinder head 1 a flat plane, the volume of the combustion chamber 6 is decreased. In other words, a high compression ratio can be achieved without increasing the capacity of the cylinder 2 or the stroke length of the piston 3.

A cavity 12 is formed in the top surface of the piston 3. A fuel injector 14 which injects fuel toward a vicinity of the center of the cavity 12 is attached in the cylinder head 1. To disperse fuel uniformly in the cavity 12, it is preferable that the fuel injector 14 faces the center of the cavity 12, and is arranged at an angle near to vertical while the intake valve 4 and exhaust valve 5 do not interfere with the fuel injector 14.

For this purpose, the cavity 12 is formed at a position offset from the aforesaid center line *X* of the row of cylinders as shown in Fig. 3.

Preferably, concerning a diameter *D1* of the cylinder 2A, an offset distance *L*_{*1*} from the center line *X* is set to be equal to or less than 0.15·*D1*. Alternatively, concerning a diameter *D2* of the cavity 12, the offset distance is set to be equal to or less than 0.29·*D2*.

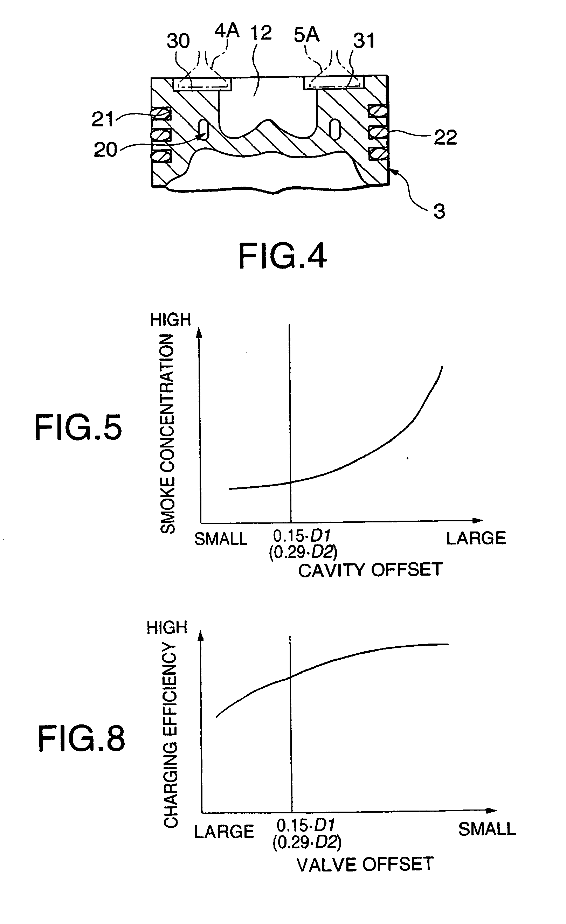

The offset of the cavity 12 is related to smoke generation, as shown in Fig. 5. When the offset is increased, the smoke concentration of the exhaust increases. By suppressing the offset distance *L*_{*1*} to within the aforesaid range, the smoke concentration can be suppressed to a low level. Further, as the lower surface 1A of the cylinder head 1 is made flat, the volume of the combustion chamber 6 including the cavity 12 at the compression top dead center of the piston 3 can be maintained at relatively small size even when the cavity 12 is given a sufficiently large volume for good combustion.

In the top surface of the piston 3, recesses 30, 31 for accommodating the valve body 4A of the intake valve 4 and the valve body 5A of the exhaust valve 5 are also formed. These recesses 30, 31 are continuous with the cavity 12 as shown in Figs. 3 and 4, but they are much shallower than the cavity 12. The intake valve 4 and exhaust valve 5 protrude into the combustion chamber 6 as they open. These recesses 30, 31 prevent the valve bodies 4A, 5A from interfering with the piston 3 when the intake valve 4 and exhaust valve 5 are open at top dead center position of the piston 3. With this arrangement, therefore, the capacity of the compression chamber 6 when the piston 3 is at the at top dead center position can be minimized.

The intake port 29 extends from the intake valve 4 in the direction of the center of the cavity 12 relative to the reference line, and the exhaust port 33 extends from the exhaust valve 5 in the opposite direction to the intake port 29.

The fuel injector 14 is arranged in a support hole 15 formed in the cylinder head 1, and is fixed to the cylinder head 1 by a bracket 16 and bolt 17.

Rotating the cams 10A, 10B which drive the intake valve 4 and exhaust valve 5 by the common camshaft 11 reduces the space required for the valve drive mechanism in the cylinder head 1 compared with the case where these cams are driven by different camshafts. This has a desirable effect in avoiding interference between the fuel injector 14 and the valve drive mechanism.

Combining this direct valve drive mechanism with the aforesaid arrangement of the cavity 12, intake valve 4 and exhaust valve 5 is extremely effective in reducing an angle θ*a* between the fuel injector 14 and a vertical line.

It is preferable that the injection holes 14A at the tip of the fuel injector 14 enter the cavity 12 when the piston 3 is at the top dead center position.

For this purpose, the fuel injector 14 is fixed to the support hole 15 so that the tip of the injector 14 projects slightly downwards from the lower surface 1A of the cylinder head 1.

Due to this arrangement, the fuel injected from the fuel injector 14 is uniformly distributed into the cavity 12.

A glow plug 18 has the function of heating the combustion chamber 6, and ensures compression firing of the air-fuel mixture when the engine is started. It is also preferable that the tip of the glow plug 18 enters the cavity 12 at the compression top dead center position of the piston 3.

For this purpose, the glow plug 18 is fixed to the cylinder head 1 so that it projects slightly downwards from the lower surface 1A of the cylinder head 1.

A circular passage 20 surrounding the cavity 12 is formed in the piston 3 as shown in Fig. 4 by core molding. This circular passage 20 is formed to have a different cross-section depending on the position. That is, a section 20A formed in a thick part with a large distance from the cavity 12 to the outer circumference of the piston 3, is larger than a section 20B formed in a thin part where the distance from the cavity 12 to the outer circumference of the piston 3 is small, as shown in Fig. 1.

The circular passage 20 has a downward opening into which cooling oil is injected from an oil spray nozzle located under the piston 3.

By varying the cross-section of the circular passage 20 in this way, a larger surface area of the circular passage 20 is contacted by the cooling oil in a thick portion of the piston 3 than in a thin portion thereof so that the piston 3 and piston rings 22 engaging with ring grooves 21 formed on the outer circumference of the piston 3 are uniformly cooled.

Further, the weight of this thick portion is correspondingly large, and increasing the cross-section of the circular passage 20 in this thick portion is desirable in achieving weight balance of the piston 3.

In this engine, the rotating cams 10A and 10B respectively drive the intake valve 4 and exhaust valve 5 via the lifters 9A and 9B. In an intake stroke of the piston 3, the intake valve 4 opens and air is aspirated into the combustion chamber 6. In a succeeding compression stroke, the air in the combustion chamber 6 is compressed by the ascending piston 3.

When the piston approaches the lower surface 1A of the cylinder head 1, the combustion chamber 6 becomes small so that its capacity is almost represented by the capacity of the cavity 12. The fuel injector 14 then injects fuel into the cavity 12 according to a fuel injection signal output from a controller, not shown. The injected fuel is self ignited due to the heat of the compressed air in the cavity 12, and is burnt. High pressure due to the combustion of the injected fuel forces the piston 3 down. This is a power stroke of the piston 3. In a succeeding exhaust stroke, the exhaust valve 5 opens and burnt gas in the combustion chamber 6 is expelled through the exhaust port 33.

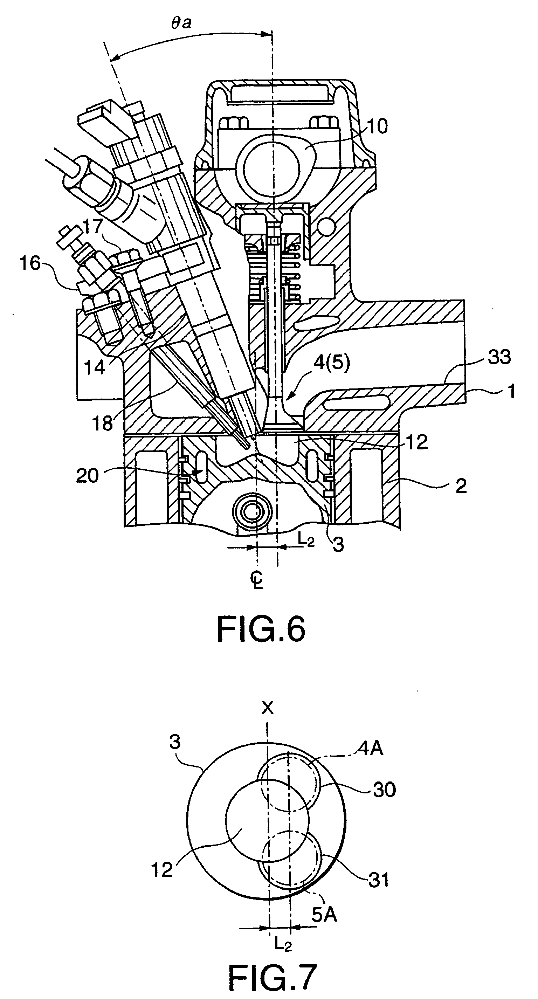

Figs. 6 - 8 show a second embodiment, not in accordance this invention. In this embodiment , the cavity 12 is arranged in the center of the cylinder 2A, and the intake valve 4 and exhaust valve 5 are offset in the opposite direction to the fuel injector 14 from the center line *X* of the row of cylinders.

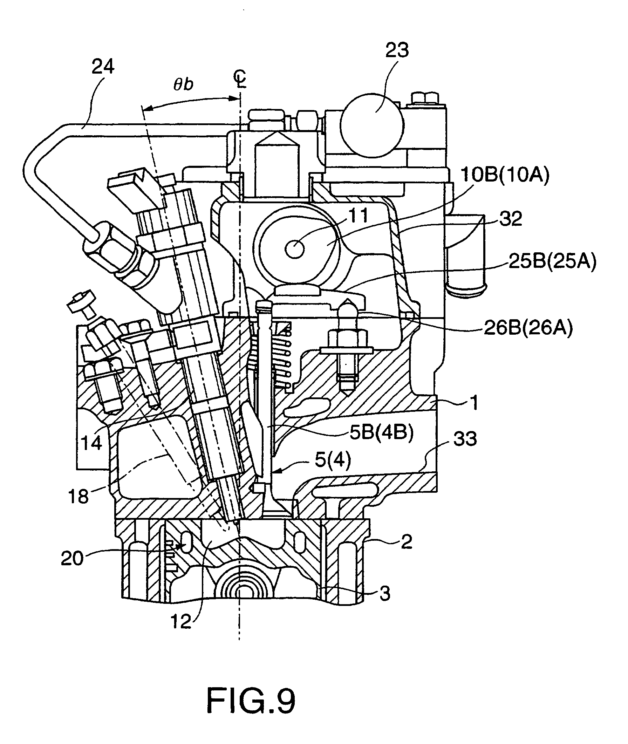

If an offset distance *L*_{*2*} from the center line *X* of the row of cylinders to a reference line connecting the centers of the intake valve 4 and exhaust valve 5 is increased, the air charging efficiency of the combustion chamber 6 will fall, as shown in Fig. 8.

However, by applying the same criteria to the offset distance *L*_{*2*} as to the offset distance *L*_{*1*} of the cavity 12 described in the aforesaid first embodiment, the air charging efficiency is maintained at a desirable level.

The positions of the fuel injector 14 and glow plug 18 are also moved so as to follow the positions of the intake valve 4 and exhaust valve 5.

The arrangement of the intake port 29 and exhaust port 33 is identical to that of the first embodiment.

According to this embodiment, although the dimensions of the intake valve 4 and exhaust valve 5 are limited compared to the aforesaid first embodiment, the cavity 12 is located at the center of the combustion chamber 6, so air usage in the combustion chamber 6 is made more uniform, and an improvement of exhaust gas composition and fuel economy can be expected.

Moreover, the cross-sections of the circular passage 20 of the core molding in the piston 3 may be made equal, so the construction of the piston 3 is also simplified.

A third embodiment, which is in accordance with this invention, will now be described referring to Fig. 9.

In this embodiment, the valve drive mechanism of the second embodiment is changed from a direct drive type to a swing arm type, and the recesses 30, 31 of the second embodiment are omitted.

A swing arm type valve drive mechanism comprises a swing arm 25B interposed between the cam 10B and the exhaust valve 5, and a swing arm 25A interposed between the cam 10A and the intake valve 4.

The swing arm 25B (25A) pivots around an end pivot 26B (26A) fixed to the cylinder head 1, and drives the exhaust valve 5 (intake valve 4) according to the rotation of the cam 10B (10A).

An end pivot 26B (26A) screws into a nut fixed on the cylinder head 1, and has a function to adjust the valve clearance of the exhaust valve 5 (intake valve 4) according to the setting of the screw position.

By providing the swing arm 25B (25A), the camshaft 11 can be offset from exactly above the valve stems 5B, 4B of the exhaust valve 5 and intake valve 4. Therefore, the fuel injector 14 can be brought closer to the cylinder center line. In other words, according to this embodiment, an angle *θb* made by the fuel injector 14 relative to the cylinder center line can be further reduced compared to the similar angle *θa* of the aforesaid first and second embodiments.

Moreover, by omitting the recesses 30, 31, the top surface of the piston 3 can be brought into the same plane except the part corresponding to the cavity 12.

As a result, although the volume of the combustion chamber 6 slightly increases due to retaining the operating space for the intake valve 4 and exhaust valve 5, fuel sprayed into the cavity 12 no longer leaks from the cavity 12 via the recess 30 or 31, so the initial combustion takes place only in the cavity 12, and combustion characteristics are improved.

The camshaft 11 is supported by a box-shaped cam carrier 32 formed in the upper part of the cylinder head 1. The common rail 23 is attached to the upper part of this cam carrier 32 to supply high pressure fuel to the fuel injector 14.

Due to this arrangement, a high pressure pipe 24 from the common rail 23 to the fuel injector 14 can be shortened, and maintenance of the fuel supply system is easier than in the aforesaid first and second embodiments.

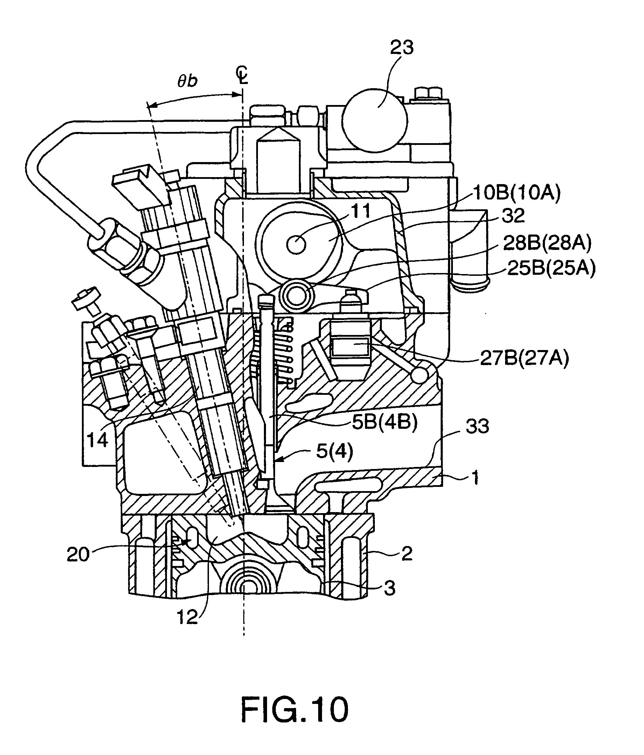

A fourth embodiment, in accordance with this invention, will now be described referring to Fig. 10.

In this embodiment, a hydraulic adjuster 27B (27A) is provided instead of the end pivot 26B (26A) of the swing arm 25B (25A) of the third embodiment. The hydraulic adjuster 27B (27A) performs a similar valve clearance adjustment to the end pivot 26B (26A) according to an oil pressure, but its fitting to the cylinder head 1 and modification of its setting are easier than the end pivot 26B (26A).

Also, to make the motion of the swing arm 25B (25A) smoother, a follower 28B (28A) in the shape of a roller is installed in the contact part with the cam 10B (10A) of the swing arm 25B (25A).

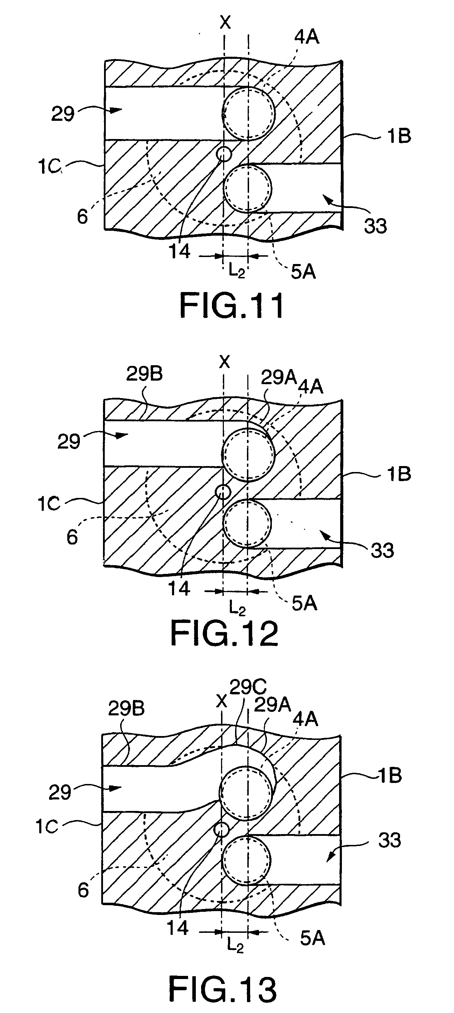

Figs. 11 - 14 shows fifth-seventh embodiments of the disposition and arrangement of the intake port 29 and exhaust port 33 in order to realize a desirable gas flow in the combustion chamber 6, and are applied to an engine where the intake valve 4 and exhaust valve 5 are offset from the center line *X* as in the second

First, in the fifth embodiment shown in Fig. 11, the intake port 29 opens onto the cylinder side face 1C on the other side of the center line *X* of the row of cylinders. The exhaust port 33 opens onto the opposite cylinder side face 1B on the same side of the center line *X*.

This arrangement of the intake port 29 and exhaust port 33 is referred to as a cross flow type. The cross flow type arrangement of the intake and exhaust ports causes the flow of intake air flowing into the combustion chamber 6 to form a swirl, which is known to help the injected fuel to disperse uniformly in the cavity 12.

In the sixth embodiment shown in Fig. 12, a helical port 29A is applied to the intake port 29 in addition to the construction of the fifth embodiment.

As the intake port 29 makes intake air flow from the linear part 29B to the combustion chamber 6 via the helical port 29A, the swirl formed in the combustion chamber 6 is reinforced, and uniformity of the injected fuel is further promoted.

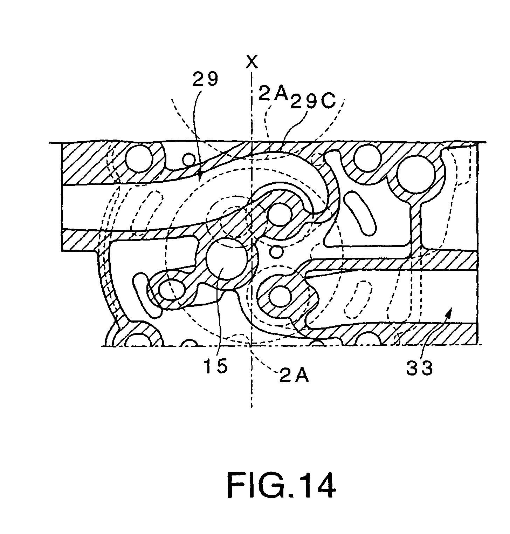

In the seventh embodiment shown in Figs. 13 and 14, a curved part 29C which expands towards the outside from the cylinder center is provided to the intake port 29 between the linear part 29B and the helical port 29A in addition to the construction of the sixth embodiment.

The curved part 29C enhances the swirl promoted by the helical port 29A. As a result, swirl is produced even at low rotation speeds at which swirl is difficult to generate.

In this case, by expanding the curved part 29C into the region of an adjacent cylinder 2A to the extent that it does not interfere with an exhaust port of the adjacent cylinder 2A as shown in Fig. 14, a strong swirl can be generated even in a small engine.

Although the invention has been described above by reference to certain embodiments of the invention, the invention is not limited to the embodiments described above. Modifications and variations of the embodiments described above will occur to those skilled in the art, in light of the above teachings.

## Claims

1. A direct injection internal combustion engine comprising:
a cylinder (2A) having a cylinder axis;
a cylinder head (1) having a flat surface perpendicular to the cylinder axis, the cylinder head (1) having an intake port (29) and an exhaust port (30);
a piston (3) reciprocating in the cylinder (2A), the piston (3) and the flat surface delimiting a combustion chamber (6) in the cylinder (2A), the piston (3) having a cavity (12) formed on a top of the piston (3) facing the combustion chamber (6), the intake port (29) and the exhaust port (30) respectively being connected to the combustion chamber (6);
an intake valve (4) which operates in a direction perpendicular to the flat surface so as to open and close the intake port (29);
an exhaust valve (5) which operates in a direction perpendicular to the flat surface so as to open and close the exhaust port (30);
a fuel injector (14) which injects fuel toward a vicinity of a center of the cavity (12);
wherein the center of the cavity (12) is offset by a predetermined distance from a reference line which connects a center of the intake valve (4) and a center of the exhaust valve (5), the intake port (29) extends from the intake valve (4) in the direction of the center of the cavity (12) with respect to the reference line while the exhaust port (30) extends from the exhaust valve (5) in a direction opposite to the intake port (29), and the fuel injector (14) is fitted in the cylinder head (1) at a position offset from the reference line in the direction of the center of the cavity (12);
**characterised in that** the engine includes a camshaft (11) arranged on the opposite side of the reference line to the cavity (12), the camshaft having a cam (10B) which opens and closes the exhaust valve (5), the motion of the cam (10B) being transmitted to the exhaust valve (5) by a swing arm (25B).

2. An engine as defined in Claim 1, wherein the cavity (12) is formed in the center of the cylinder (2A), and the reference line is offset by the predetermined distance from the cylinder axis.

3. An engine as defined in Claim 1, wherein the engine is a multi-cylinder engine comprising plural cylinders (2A) arranged in a row, and the intake valve (4) and exhaust valve (5) of each cylinder (2A) are disposed so that the reference line is parallel to a center line connecting the centers of the cylinders (2A).

4. An engine as defined in Claim 1, wherein the fuel injector (14) is attached to the cylinder head (1) with a predetermined angle relative to the cylinder axis.

5. An engine as defined in Claim 1, wherein the engine further comprises a glow plug (18) attached to the cylinder head (1) at a position further than the fuel injector (14) from the reference line.

6. An engine as defined in Claim 1, wherein the fuel injector (14) is attached to the cylinder head (1) so as to be inclined at a predetermined angle relative to the cylinder axis, and the engine further comprises a glow plug (18) attached to the cylinder head (1) so as to be inclined at a larger angle than the predetermined angle.

7. The engine as defined in Claim 5 or Claim 6, wherein the glow plug (18) is disposed at a position so that a tip of the glow plug (18) protrudes into the cavity (12) when the piston (3) comes to a top dead center position.

8. The engine as defined in Claim 1, wherein the engine further comprises a hydraulic adjuster (27B) which supports one end of the swing arm (25B) at a position defined according to an oil pressure.

9. The engine as defined in Claim 1, wherein the camshaft (11) further has a second cam (10A) which opens and closes the intake valve (4), and the camshaft (11) is disposed over the reference line.

10. The engine as defined in Claim 9, wherein the engine further comprises a second swing arm (25A) which transmits the motion of the second cam (10A) to the intake valve (4).

11. The engine as defined in Claim 10, wherein the engine further comprises a hydraulic adjuster (27A) which supports one end of the second swing arm (25A) at a position defined according to an oil pressure.

12. The engine as defined in Claim 10 or Claim 11, wherein the camshaft (11) is disposed above the second swing arm (25A).

13. The engine as defined in any preceding Claim, wherein the engine is a diesel engine.

14. The engine as defined in any preceding Claim, wherein the center of the cavity (12) is offset from the cylinder axis, and the piston (3) is provided with a circular passage (20) surrounding the cavity (12) for cooling the piston (3), wherein a section (20A, 20B) of the circular passage (20) is set larger the larger the distance from the cavity (12) to an outer circumference of the piston (3).

15. The engine as defined in any preceding Claim, wherein the predetermined distance is set to not more than 0.15·*D1* relative to a diameter *D1* of the cylinder (2A).

16. The engine as defined in any preceding Claim, wherein the predetermined distance is set to not more than 0.29·*D2* relative to a diameter *D2* of the cavity (12).

17. The engine as defined in Claim 1, wherein the reference line is situated in the same plane as the cylinder axis.

18. The engine as defined in Claim 1, wherein the engine is a multi-cylinder engine comprising plural cylinders (2A) arranged in a row, and the intake valve (4) and exhaust valve (5) of each cylinder (2A) are disposed so that the reference line coincides with a center line connecting the centers of the cylinders (2A).

19. The engine as defined in any preceding Claim, wherein the intake port (29) is provided with a helical part (29A) formed in the vicinity of the intake valve (4), and a linear part (29B) connected to the helical part (29A).

20. The engine as defined in Claim 19, wherein the intake port (29) is further provided with a curved part (29C) which expands away from the intake valve (4) between the helical part (29A) and linear part (29B).

21. The engine as defined in Claim 20, wherein the engine is a multi-cylinder engine comprising plural cylinders (2A) arranged in a row, and the apex of the curved part (29C) is located in a region of an adjacent cylinder (2A).

22. The engine as defined in Claim 1, wherein the cam shaft (11) is disposed above the swing arm (25B).

## Patentansprüche

1. Brennkraftmaschine mit Direkteinspritzung, umfassend:
einen Zylinder (2A), der eine Zylinderachse aufweist;
einen Zylinderkopf (1), der eine ebene Fläche senkrecht zur Zylinderachse aufweist, wobei der Zylinderkopf (1) einen Einlasskanal (29) und einen Auslasskanal (33) aufweist;
einen Kolben (3), der sich im Zylinder (2A) hin- und herbewegt, wobei der Kolben (3) und die ebene Fläche einen Brennraum (6) im Zylinder (2A) begrenzen; der Kolben (3) einen Hohlraum (12) aufweist, der an einem Oberteil des Kolbens (3), der zum Brennraum (6) zeigt, ausgebildet ist; und der Einlasskanal (29) und der Auslasskanal (33) jeweils mit dem Brennraum (6) verbunden ist;
ein Einlassventil (4), das in einer Richtung senkrecht zur ebenen Fläche arbeitet, um den Einlasskanal (29) zu öffnen und zu schließen;
ein Auslassventil (5), das in einer Richtung senkrecht zur ebenen Fläche arbeitet, um den Auslasskanal (33) zu öffnen und zu schließen;
ein Einspritzventil (14), das Kraftstoff in einen Bereich nahe der Mitte des Hohlraumes (12) einspritzt;
wobei die Mitte des Hohlraumes (12) um einen vorgegebenen Abstand von einer Bezugslinie, die eine Mitte des Einlassventils (4) und eine Mitte des Auslassventils (5) verbindet, seitlich versetzt ist; der Einlasskanal (29) sich in Bezug auf die Bezugslinie vom Einlassventil (4) aus in Richtung der Mitte des Hohlraumes (12) erstreckt, während sich der Auslasskanal (33) vom Auslassventil (5) aus in einer dem Einlasskanal (29) entgegengesetzten Richtung erstreckt; und das Einspritzventil (14) im Zylinderkopf (1) an einer Position angebracht ist, die von der Bezugslinie aus in Richtung der Mitte des Hohlraumes (12) seitlich versetzt ist;
**dadurch gekennzeichnet, dass** die Kraftmaschine eine Nockenwelle (11) umfasst, die auf der dem Hohlraum (12) gegenüber liegenden Seite der Bezugslinie angeordnet ist; und die Nockenwelle eine Nocke (10B) aufweist, die das Auslassventil (5) öffnet und schließt, wobei die Bewegung der Nocke (10B) durch einen Schwinghebel (25B) auf das Auslassventil (5) übertragen wird.

2. Kraftmaschine nach Anspruch 1, bei der der Hohlraum (12) in der Mitte des Zylinders (2A) ausgebildet ist und bei der die Bezugslinie um den vorgegebenen Abstand von der Zylinderachse seitlich versetzt ist.

3. Kraftmaschine nach Anspruch 1, bei der die Kraftmaschine eine Mehrzylindermaschine ist, die mehrere, in einer Reihe angeordnete Zylinder (2A) umfasst und bei der das Einlassventil (4) und das Auslassventil (5) eines jeden Zylinders (2A) so angeordnet sind, dass die Bezugslinie parallel zu einer Mittelachse, die die Mitten der Zylinder (2A) verbindet, angeordnet ist.

4. Kraftmaschine nach Anspruch 1, bei der das Einspritzventil (14) am Zylinderkopf (1) unter einem vorgegebenen Winkel in Bezug auf die Zylinderachse angebracht ist.

5. Kraftmaschine nach Anspruch 1, bei der die Kraftmaschine außerdem eine Glühkerze (18) umfasst, die am Zylinderkopf (1) an einer Position angebracht ist, die von der Bezugslinie weiter als das Einspritzventil (14) entfernt ist.

6. Kraftmaschine nach Anspruch 1, bei der das Einspritzventil (14) so am Zylinderkopf (1) angebracht ist, dass es unter einem vorgegebenen Winkel in Bezug auf die Zylinderachse geneigt ist und bei der die Kraftmaschine außerdem eine Glühkerze (18) umfasst, die am Zylinderkopf (1) so angebracht ist, dass sie unter einem größeren Winkel als der vorgegebene Winkel geneigt ist.

7. Kraftmaschine nach Anspruch 5 oder Anspruch 6, bei der die Glühkerze (18) an einer Position so angeordnet ist, dass eine Spitze der Glühkerze (18) in den Hohlraum hineinragt (12), wenn der Kolben (3) eine obere Totpunktposition erreicht.

8. Kraftmaschine nach Anspruch 1, bei der die Kraftmaschine außerdem ein hydraulisches Einstellelement (27B) umfasst, das ein Ende des Schwinghebels (25B) an einer Position abstützt, die in Abhängigkeit eines Öldruckes definiert ist.

9. Kraftmaschine nach Anspruch 1, bei der die Nockenwelle (11) außerdem eine zweite Nocke (10A) aufweist, die das Einlassventil (4) öffnet und schließt und bei der die Nockenwelle (11) über der Bezugslinie angeordnet ist.

10. Kraftmaschine nach Anspruch 9, bei der die Kraftmaschine außerdem einen zweiten Schwinghebel (25A) umfasst, der die Bewegung der zweiten Nocke (10A) auf das Einlassventil (4) überträgt.

11. Kraftmaschine nach Anspruch 10, bei der die Kraftmaschine außerdem ein hydraulisches Einstellelement (27A) umfasst, das ein Ende des zweiten Schwinghebels (25A) an einer Position abstützt, die in Abhängigkeit eines Öldruckes definiert ist.

12. Kraftmaschine nach Anspruch 10 oder Anspruch 11, bei der die Nockenwelle (11) oberhalb des zweiten Schwinghebels (25A) angeordnet ist.

13. Kraftmaschine nach einem der vorhergehenden Ansprüche, bei der die Kraftmaschine ein Dieselmotor ist.

14. Kraftmaschine nach einem der vorhergehenden Ansprüche, bei der die Mitte des Hohlraumes (12) bezogen auf die Zylinderachse seitlich versetzt ist und bei der der Kolben (3) mit einem Ringkanal (20) versehen ist, der den Hohlraum (12) zum Kühlen des Kolbens (3) umgibt, wobei ein Querschnitt (20A, 20B) des Ringkanals (20) umso größer gewählt wurde, je größer der Abstand von dem Hohlraum (12) zu einem äußeren Umfang des Kolbens (3) ist.

15. Kraftmaschine nach einem der vorhergehenden Ansprüche, bei der der vorgegebene Abstand bezogen auf einen Durchmesser D1 des Zylinders (2A) auf einen Wert von höchstens 0,15 · D1 festgelegt ist.

16. Kraftmaschine nach einem der vorhergehenden Ansprüche, bei der der vorgegebene Abstand bezogen auf einen Durchmesser D2 des Hohlraumes (12) auf einen Wert von höchstens 0,29 · D2 festgelegt ist.

17. Kraftmaschine nach Anspruch 1, bei der die Bezugslinie in der gleichen Ebene wie die Zylinderachse liegt.

18. Kraftmaschine nach Anspruch 1, bei der die Kraftmaschine eine Mehrzylindermaschine ist, die mehrere, in einer Reihe angeordnete Zylinder (2A) umfasst und bei der das Einlassventil (4) und das Auslassventil (5) eines jeden Zylinders (2A) so angeordnet sind, dass die Bezugslinie mit einer Mittelachse, die die Mitten der Zylinder (2A) verbindet, übereinstimmt.

19. Kraftmaschine nach einem der vorhergehenden Ansprüche, bei der der Einlasskanal (29) in der Nähe des Einlassventiles (4) mit einem wendelförmigen Teil (29A) versehen ist und bei der ein gerader Teil (29B) mit dem wendelförmigen Teil (29A) verbunden ist.

20. Kraftmaschine nach Anspruch 19, bei der der Einlasskanal (29) außerdem mit einem gekrümmten Teil (29C) versehen ist, der sich zwischen dem wendelförmigen Teil (29A) und dem geraden Teil (29B) vom Einlassventil (4) weg erstreckt.

21. Kraftmaschine nach Anspruch 20, bei der die Kraftmaschine eine Mehrzylindermaschine ist, die mehrere, in einer Reihe angeordnete Zylinder (2A) umfasst und bei der sich der Scheitelpunkt des gekrümmten Teils (29C) in einem Bereich eines benachbarten Zylinders (2A) befindet.

22. Kraftmaschine nach Anspruch 1, bei der die Nockenwelle (11) oberhalb des Schwinghebels (25B) angeordnet ist.

## Revendications

1. Moteur à combustion interne à injection directe, comprenant:
un cylindre (2A) comportant un axe de cylindre;
une culasse de cylindre (1) comportant une surface plate perpendiculaire à l'axe du cylindre, la culasse de cylindre (1) comportant un orifice d'admission (29) et un orifice d'échappement (30);
un piston (3) effectuant un déplacement alternatif dans le cylindre (2A), le piston (3) et la surface plate délimitant une chambre de combustion (6) dans le cylindre (2A), le piston (3) comportant une cavité (12) formée sur une partie supérieure du piston (3) faisant face à la chambre de combustion (6), l'orifice d'admission (29) et l'orifice d'échappement (30) étant respectivement connectés à la chambre de combustion (6);
une soupape d'admission (4) se déplaçant dans une direction perpendiculaire à la surface plate, de sorte à ouvrir et fermer l'orifice d'admission (29);
une soupape d'échappement (5) se déplaçant dans une direction perpendiculaire à la surface plate, de sorte à ouvrir et fermer l'orifice d'échappement (30);
un injecteur de carburant (14) injectant le carburant vers un point proche d'un centre de la cavité (12);
le centre de la cavité (12) étant décalé d'une distance prédéterminée par rapport à une ligne de référence connectant un centre de la soupape d'admission (4) et un centre de la soupape d'échappement (5), l'orifice d'admission (29) s'étendant à partir de la soupape d'admission (4) dans la direction du centre de la cavité (12) par rapport à la ligne de référence, l'orifice d'échappement (30) s'étendant à partir de la soupape d'échappement (5) dans une direction opposée à l'orifice d'admission (29), l'injecteur de carburant (1 4) étant fixé dans la culasse de cylindre (1) au niveau d'une position décalée par rapport à la ligne de référence dans la direction du centre de la cavité (12);
**caractérisé en ce que** le moteur englobe un arbre à cames (11) agencé sur le côté de la ligne de référence opposé à la cavité (12), l'arbre à cames comportant une came (10B) ouvrant et fermant la soupape d'échappement (5), le déplacement de la came (10B) étant transmis à la soupape d'échappement (5) par un bras pivotant (25B).

2. Moteur selon la revendication 1, dans lequel la cavité (12) est formée dans le centre du cylindre (2A), la ligne de référence étant décalée de la distance prédéterminée de l'axe du cylindre.

3. Moteur selon la revendication 1, dans lequel le moteur est un moteur polycylindrique comprenant plusieurs cylindres (2A) agencés dans une rangée, la soupape d'admission (4) et la soupape d'échappement (5) de chaque cylindre (2A) étant agencées de sorte que la ligne de référence est parallèle à la ligne médiane connectant les centres des cylindres (2A).

4. Moteur selon la revendication 1, dans lequel l'injecteur de carburant (14) est fixé sur la culasse de cylindre (1) à un angle prédéterminé par rapport à l'axe du cylindre.

5. Moteur selon la revendication 1, dans lequel le moteur comprend en outre une bougie de préchauffage (18) fixée sur la culasse de cylindre (1) au niveau d'une position éloignée davantage de la ligne de référence que l'injecteur de carburant (14).

6. Moteur selon la revendication 1, dans lequel l'injecteur de carburant (14) est fixé sur la culasse de cylindre (1), de sorte à être incliné à un angle prédéterminé par rapport à l'axe du cylindre, le moteur comprenant en outre une bougie de préchauffage (18) fixée sur la culasse de cylindre (1) de sorte à être inclinée à un angle plus grand que l'angle prédéterminé.

7. Moteur selon les revendications 5 ou 6, dans lequel la bougie de préchauffage (18) est agencée au niveau d'une position telle qu'une pointe de la bougie de préchauffage (18) déborde dans la cavité (12) lorsque le piston (3) atteint une position de centre mort supérieur.

8. Moteur selon la revendication 1, dans lequel le moteur comprend en outre un moyen d'ajustement hydraulique (27B) supportant une extrémité du bras pivotant (25B) au niveau d'une position définie en fonction d'une pression d'huile.

9. Moteur selon la revendication 1, dans lequel l'arbre à cames (11) comporte en outre une deuxième came (10A) ouvrant et fermant la soupape d'admission (4), l'arbre à cames (11) étant agencé au-dessus de la ligne de référence.

10. Moteur selon la revendication 9, dans lequel le moteur comprend en outre un deuxième bras pivotant (25A) transmettant le déplacement de la deuxième came (10A) vers la soupape d'admission (4).

11. Moteur selon la revendication 10, dans lequel le moteur comprend en outre un moyen d'ajustement hydraulique (27A) supportant une extrémité du deuxième bras pivotant (25A) au niveau d'une position définie en fonction d'une pression d'huile.

12. Moteur selon les revendications 10 ou 11, dans lequel l'arbre à cames (11) est agencé au-dessus du deuxième bras pivotant (25A).

13. Moteur selon l'une quelconque des revendications précédentes, dans lequel le moteur est un moteur Diesel.

14. Moteur selon l'une quelconque des revendications précédentes, dans lequel le centre de la cavité (12) est décalé par rapport à l'axe du cylindre, le piston (3) comportant un passage circulaire (20) entourant la cavité (12) pour refroidir le piston (3), une section (20A, 20B) du passage circulaire (20) étant accrue en fonction de l'accroissement de la distance entre la cavité (12) et une circonférence externe du piston (3).

15. Moteur selon l'une quelconque des revendications précédentes, dans lequel la distance prédéterminée n'est pas supérieure à 0,15 · D1 par rapport à un diamètre D1 du cylindre (2A).

16. Moteur selon l'une quelconque des revendications précédentes, dans lequel la distance prédéterminée n'est pas supérieure à 0,29 · D2 par rapport à un diamètre D2 de la cavité (12).

17. Moteur selon la revendication 1, dans lequel la ligne de référence est située dans le même plan que l'axe du cylindre.

18. Moteur selon la revendication 1, dans lequel le moteur est un moteur polycylindrique comprenant plusieurs cylindres (2A) agencés dans une rangée, la soupape d'admission (4) et la soupape d'échappement (5) de chaque cylindre (2A) étant agencées de sorte que la ligne de référence coïncide avec une ligne médiane connectant les centres des cylindres (2A).

19. Moteur selon l'une quelconque des revendications précédentes, dans lequel l'orifice d'admission (29) comporte une partie hélicoïdale (29A) formée au voisinage de la soupape d'admission (4), et une partie linéaire (29B) connectée à la partie hélicoïdale (29A).

20. Moteur selon la revendication 19, dans lequel l'orifice d'admission (29) comporte en outre une partie courbée (29C) s'étendant à l'écart de la soupape d'admission (4), entre la partie hélicoïdale (29A) et la partie linéaire (29B).

21. Moteur selon la revendication 20, dans lequel le moteur est un moteur polycylindrique comprenant plusieurs cylindres (2A) agencés dans une rangée, le sommet de la partie courbée (29C) étant agencé dans une région d'un cylindre adjacent (2A).

22. Moteur selon la revendication 1, dans lequel l'arbre à cames (11) est agencé au-dessus du bras pivotant (25B).
